# EUROPEAN PATENT SPECIFICATION

(11) **EP 1 050 091 B1**
(45) Date of publication and mention of the grant of the patent: **31.07.2002**
(21) Application number: 99900026.8
(22) Date of filing: 11.01.1999
(51) Int. Cl.: H02G 3/04, F16L 3/26, B60R 16/02, H02G 9/06

(54) **PROTECTIVE TUBULAR SHEATH WITH LONGITUDINAL SLIT**
SCHLAUCHFÖRMIGE SCHUTZHÜLLE MIT LÄNGSSCHLITZ
GAINE PROTECTRICE TUBULAIRE AVEC FENTE LONGITUDINALE

(30) Priority: 23.01.1998 US 12714
(43) Date of publication of application: 08.11.2000
(73) Proprietor: Federal-Mogul Systems Protection Group Inc., Exton, Pennsylvania 19341 (US)
(72) Inventor: MARTIN, Lee, H., West Chester, PA 19380 (US)
(74) Representative: Hammersley, John
(86) International application number: PCT/IB99/00026
(87) International publication number: WO 99/38236

(56) References cited:
- EP-A- 0 291 418
- DE-U- 8 903 070
- FR-A- 2 745 429
- FR-A- 2 745 962

## Description

### Field of the Invention

This invention relates to a protective tubular sheath for the protection of elongate substrates, such as electrical wiring or hose members. In particular this invention relates to a tubular sheath of the type that has a longitudinal slit to allow for installation over the elongate substrate being protected and is flexible to conform to bending of the substrate.

### Background of Invention

Protective tubular sheaths made of a plastics material are commonly used in the automotive industry as protective sleeving for vehicle components to protect the latter from abrasion. In order to provide protection for a long period of time, desirably the life of the vehicle, the materials used are relatively stiff and abrasion resistant, so-called engineering plastics, and the sheath preferably fabricated with a convoluted or corrugated wall profile, wherein the corrugations or convolutions extend substantially circumferentially so as to impart to the product a flexibility which allows it to follow a path which may include one or more relatively sharp bends without collapsing at the bend points.

The term "engineering plastics" is used in this specification to refer to plastics, usually thermoplastics, materials which have properties of tensile, compressive and shear strengths, impact resistance and stiffness which can be retained for long periods of time and under a variety of load bearing conditions. Examples of such materials useful for carrying out the invention are polyolefins, polyamides, polyesters, polyketones, poly(vinyl chloride) and fluoropolymers. The preferred materials are generally relatively stiff to prevent collapse and to provide abrasion resistance and the corrugations are provided to impart the requisite flexibility to fit over articles having relatively sharp bends.

In a typical vehicle engine compartment, the components comprising the substrate to be protected, namely elongate members such as hoses, pipes or wires, are often previously installed and the protective sheath is longitudinally slit so that the edges of the slit can be slipped over the substrate. To avoid a situation in which bending or flexing of the sheath causes the sheath to fall from the substrate it is usual for the edges of the slit to be biased so as to tend to close naturally on each other. However, whereas it may be possible to ensure that the protected substrate members are properly sheathed during installation, subsequent manipulation of the sheathed members may create forces that cause or permit opening of the slit, and to obviate such possibility it is also usual to apply tape or other supplemental fastening means to the sheath to effect a more permanent closure of the slit.

The installation and use of practicable forms of the protective tubular sheath just described has various economic and technical shortcomings. Firstly, when using the relatively stiff materials preferred for the purposes of imparting durability and abrasion resistance to the product, relatively sharp slit edges are created which, in conjunction with the naturally-closing slit edges makes it difficult for a worker to separate the slit edges without injury to the fingers or having to use a separate opening tool. Secondly, supplemental fastening to insure against opening of the slit is a labor-intensive step which is undesirably expensive. Finally, during use of the vehicle, bending and twisting forces occur, particularly when the vehicle is moving over relatively rough surfaces, and undesirable noises and wear are created by the edges of the slit rubbing against one another. Notwithstanding the supplemental fastening, these forces may even result in the slit opening sufficiently to allow small articles, such as wires, to be pinched, or severed, or the ingress of foreign matter.

It has been proposed to manufacture protective sheaths with means for effectively closing such longitudinal slit, but they are primarily aimed at sealing the slitto prevent passage of any object or dirt rather than dosing the slit against unwanted opening.

FR-A1-2745962 shows a protective tubular sheath with such a longitudinal slit wherein the slit is closed to prevent inadvertent opening or ingress of foreign matter by a flap or the like secured to the outer wall of the sheath and bridging the slit externally. FR-A1-2745429 also shows a protective tubular sheath with a longitudinal slit, the sheath having an internal wall which is smooth and carries a flap at one side of the slit which bridges the slit internally. DE-U1-89030702 shows a protective tubular sheath moulded thermoplastic material having a convoluted wall construction. The tubular structure has a longitudinally extending slit, one side of which is defined by an integrally moulded, longitudinally extending bead and the other side of which is defined by a complementary integrally moulded, longitudinally extending slot for locating the bead and which bridges the slit at the outer and inner peripheral walls of the sheath. The components of the fastening means are continuous and inextensible lengthwise which limits the flexibility of the sheath.

### Summary and Objects of the Invention

It is an object of the present invention to provide a longitudinally slit protective tubular sheath of simple construction that can be applied to an elongate substrate with less effort and more cost effectively than hitherto.

It is a further object to provide a longitudinally slit protective tubular sheath that is better able to resist opening without supplemental fastening means than hitherto.

A still further object achievable by a protective tubular sheath constructed according to the invention is a soft feel imparted to the edges of the slit making it easier for operatives to fit the sleeving over articles to be protected without injuring the fingers.

A still further object of the present invention is to provide a protective tubular sheath that eliminates undesirable noise associated with the slit edges rubbing against each other when exposed to the twisting and bending forces experienced during operation of a vehicle.

In accordance with the present invention a protective tubular sheath for disposing in surrounding relationship with an elongate substrate comprises a longitudinally slit tubular body of resilient plastics material having inner and outer wall surfaces, the longitudinal slit having opposing sides, defined by edge portions of the body wall interconnecting the inner and outer surfaces of the wall, arranged to face each other, and is characterised by releasable fastening means having complementary parts, each part being secured to said body wall and overlying a respective one of the edge portions facing the other edge portion and projecting towards the other complementary part, the complementary parts being responsive to forcing the edge portions towards each other to close the longitudinal slit by releasable inter-engagement with each other.

Preferably, but not essentially, the body wall is stressed to provide a bias force urging the edge portions towards each other and the complementary parts of the fastening means arranged to inter-engage in absence of a separating force greater than the bias force.

The tubular body wall may be corrugated by a longitudinal succession of integrally formed peaks and valleys, each said peak and valley extending substantially circumferentially of the body and defining said edge portions having an effective thickness greater than the thickness of the material of the body wall, and at least one of the complementary parts of the fastening means has a width greater than the thickness of the material of the body wall and overlies the ends of the corrugations exposed at the edge portion to which it is secured.

In this specification the term "corrugated" is used in relation to the tubular body to mean periodic uniform changes in cross-section in a plane orthogonal to the longitudinal axis to produce, in a longitudinal plane, a cross-section that is substantially square, (including trapezoidal), or substantially sinusoidal (including semi-circular). Furthermore the term is intended to include convolutions, wherein the corrugations are defined by a longitudinal succession of circumferentially extending discrete peaks and valleys, and also a helix, wherein a substantially circumferentially and longitudinally extending peak defines by successive revolutions the effect of convolutions.

Preferably the body wall of the protective tubular sheath is made of an engineering plastics material which provides the property of durability and abrasion resistance as well as a degree of resilience required to effect longitudinal flexibility and limited opening and closing of the longitudinal slit.

Achievement of the above and other objects and advantages of the invention will become further apparent upon reference to the following detailed description of illustrative embodiments of the invention and to the accompanying drawings.

### Brief Description of the Drawings

Figure 1 is a perspective view of a protective tubular sheath in accordance with a first embodiment of the invention, including a corrugated tubular body in which the longitudinally extending slit is formed and releasable fastening means thereat,
Figure 2 is a schematic plan view of the tubular sheath of Figure 1 in which the slit is shown opened by deforming the tubular body until both sides of the slit face the same direction in a common plane, to illustrate both complementary parts of the fastening means, and
Figures 3(a) and 3(c) are partial cross-sections through variants of the corrugated sheath of Figures 1 and 2 illustrating different associations between the dimensions of the complementary parts of the fastening means and the corrugated wall of the article body.

### Detailed Description of the Preferred Embodiment of the Invention

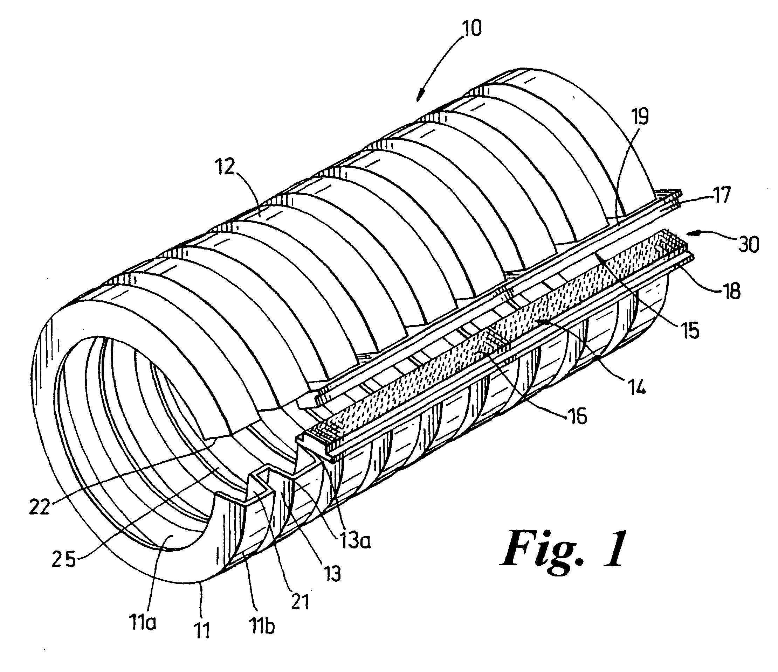

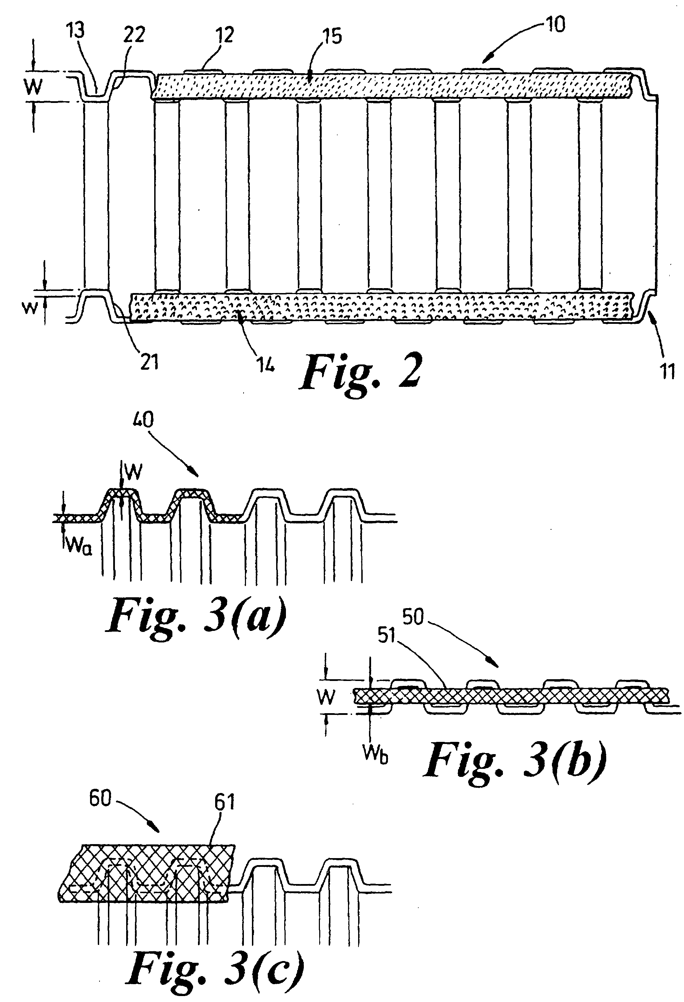

In carrying out the invention, reference is made to Figures 1 and 2 showing a portion of a protective tubular sheath 10 comprising a longitudinally slit tubular body 11 having inner and outer wall surfaces 11ₐ and 11_{b} respectively. The body wall is corrugated by a longitudinal succession of integrally formed peaks and valleys 12 and 13 respectively, each extending substantially circumferentially of the body and terminating in edge portions 21 and 22, interconnecting the inner and outer surfaces of the body, each having an effective thickness W radially that is greater than the thickness w of the material of the body wall. The edge portions 21 and 22 normally face each other and define opposing sides of the longitudinal slit, indicated at 25, and the body wall is stressed such that the edge portions are biased towards an abutting relationship with each other.

The tubular body is relatively resilient, at least to the extent that the edge portions 21 and 22 can be forced apart by overcoming the closure bias to permit the body to be placed in surrounding relationship with substrate members to be protected, and to the extent that the longitudinally corrugated tube can be bent into various configurations. The tube is made from plastics material and particularly an engineering plastics material as defined above, notwithstanding that materials suitable to withstand abrasion and collapse are generally stiff and not highly resilient.

In this exemplary embodiment the tubular body is formed of polyvinyl chloride with a wall thickness of about 0.025cm (0.01 inch) and outer diameter of 2.54cm (1 inch) and corrugation pitch of about 3 per cm (8 per inch).

A protective tubular sheath consisting of such a longitudinally slit tubular body per se is known as discussed above. The above discussion also highlighted that it has been necessary to construct the tubular body with a high level of in-built slit-closing bias to prevent inadvertent opening and also the practical difficulty this presents to deliberate opening during installation or removal.

In accordance with the present invention the sheath 10 is provided with releasable fastening means indicated generally at 30, secured to the body wall 11 and overlying the edge portions 21 and 22.

The fastening means comprises complementary parts 14 and 15 each bonded to a respective one of edge portions 21 and 22 as strips extending respectively in the plane of each edge portion longitudinally along the slit for substantially the whole length of the slit.

The complementary parts 14, 15 of the fastening means comprise tapes of projecting hook and loop elements 16, 17 each projecting from a substrate 18, 19 respectively, being of the kind commonly marketed under the trademark VELCRO. The hook and loop tapes are preferably bonded to the biased edge portions 21 and 22 by means, well known in the art, such as adhesive or ultrasonic bonding, so that the hook elements of tape 14 lining one edge portion and loop elements of tape 15 lining the other edge portion project substantially normally from the edges of the slit into engagement with one another so that they interlock under the natural biasing forces in the body tending to close the slit and thereby close the slit without abutment of the hard, and potentially noisy, material of the body wall.

The complementary parts of the fastening means are, of course, releasable from their mutual inter-engagement and separable upon provision of a force that overcomes the inter-engagement and bias force. It will be appreciated that with a sheath of this type it is normal only to open the slit locally at any longitudinal position for installation and for the open region to move progressively along the tubular body and to this end the fastening means is arranged to have the complementary parts 14 and 15 separated locally by passage in a direction along the slit of an opening member (not shown) extending into the sheath through the inter-engaged complementary parts.

In particular, by having hook and loop elements flexible and deformable with respect to a human finger, the bias force is arranged to be overcome, and the hook and loop elements disengaged, by an opening member comprising a said human finger. Notwithstanding the bias force and sharp comers of the corrugations which exist at the edge portions, as illustrated at 13ₐ, the sheath is readily opening and fitted progressively along its length without the need for special tools and uninjuriously to the operative, permitting an increased rate of fitting.

Supplemental fastening, such as taping, as an additional step in the sealing process is unnecessary and the risk of wires or other members projecting outwardly from the slit is avoided. Similarly, rubbing of the edges caused by the forces which flex the tubular sheath in use are greatly inhibited, eliminating a source of troublesome noise within an engine compartment. Furthermore, when used with a substrate comprising a bundle of wires or like members, one or more members of the bundle may be broken out of the slit without risk of abrasion due to the relatively soft nature of the fastening means.

It will be appreciated that the provision of releasable fastening means, particularly of the 'soft-feel' hook and loop type permits a wide variation in the choice of slit-closing bias that is built into the tubular body.

At one extreme, because an operative's finger is protected from sharp edges by the fastening means, an increased bias would be tolerable. At the other extreme, because an additional separation force is required to separate the complementary parts 21 and 22, the bias may be reduced from that previously considered necessary without risk of the sheath releasing its contents, even down to zero bias. Such a reduced bias would also ease opening by the operative and/or permit the use of fastening means having different inter-engagement methods that with the traditional bias force would be unsuitable for opening using the operative's finger.

It will be appreciated that although it is convenient in many situations for a human finger to be employed as the opening member, any inanimate projecting tool may be employed, wielded manually or by machine, and employed with fastening means having the above-described as forms of inter-engagement or others not suited to direct separation by the operative's finger at the prevailing bias.

In the embodiment described above, the width of each complementary hook and loop strip is greater than the thickness of the wall material and it overlies the ends of the corrugations exposed at the edge portion to which it is secured. Furthermore, it is chosen to have a width substantially equal to the overall thickness of the corrugated wall so that sharp comers and edges of the wall are covered. This is shown particularly in Figure 2 which shows the tubular body deformed to open the slit and separate the complementary parts of the fastening means to the extent that they lie in a common longitudinal plane, although it should be understood that the slit would not normally be opened to such an extent in practice, nor the material resilience permit it.

It will be appreciated that efficacy of the fastening means depends not only upon the releasable inter-engagement between the complementary parts but also upon the extent to which they individually and together influence the flexibility of the tubular sheath and the bond between the substrates 16 and 17 and the edge portions of the body. These in turn may depend upon the thickness of the wall material and the shape, amplitude and pitch of the corrugations. The inter-engagement between the complementary parts may be made less dependent upon the bond between substrate and wall by varying the width of one or both complementary parts with respect to the overall convoluted wall thickness.

Referring to Figure 3(a) a cross-section through a second embodiment of tubular sheath 40 shows that at least one complementary part 41 of the fastening means corresponds in width Wₐ to the thickness w of the material of the body wall and follows the path of the corrugations.

Referring to Figure 3(b) a similar cross-section through a third embodiment of tubular sheath 50 shows at least one complementary part 51 of the fastening means having a width W_{b} less that the overall thickness W of the corrugated wall such that it overlies only the radially extending parts. Absence of attachment to the longitudinally extending parts of the corrugations may improve longitudinal flexibility.

Figure 3(c) shows in third embodiment 60 a complementary part of the fastening means 61 which presents an interconnecting face wider than the overall thickness of the corrugated wail to maximise inter-engagement or to ensure that the complementary parts adequately inter-engage even if the tubular body is distorted.

It will be appreciated that in all of the above variants, the complementary parts may show the same shape and dimensions as each other or differ in that each one comprises any one of the above.

It will be appreciated that while it is convenient to secure the complementary parts of the fastening means to the edge portions 21 or 22 of the body wall that face each other across the slit, the parts may be secured to the inner and outer wall surfaces 11a, 11b so as to overlie the edge portions without being secured thereto directly.

Also, the complementary parts of the fastening strip may be secured by any suitable method, for example by providing the strips with a self-adhesive layer such that they have merely to be pinched between the sides of the slit.

It will also be appreciated that although the protective sheath of the invention has been described in terms of a tubular body formed from an engineering plastics material in line with foregoing longitudinally split sheath constructions, it is possible to manufacture such a sheath from a cheaper plastics material or even a non-plastics material which exhibits the desired degree of flexibility and resilience having regard to the level of slit-closing bias considered necessary in view of the resistance of the fastening means to opening and lack of actual abutment of the edge portions.

It is reiterated that a protective tubular sheath in accordance with the present invention is not limited to a corrugated form as shown. The shape and amplitude and pitch of corrugations may be varied to the extent that the body wall is smooth and comprises the thickness w of the wall material, notwithstanding that this may require a material having inherent stretchability and result in a sheath having less longitudinal flexibility.

Furthermore, notwithstanding the material and wall structure of the tubular body, it may be formed with other than circular cross-section importing different characteristics to longitudinal flexibility and opening and closing of the slit.

## Claims

1. A protective tubular sheath (10; 40; 50; 60) for disposing in surrounding relationship with an elongate substrate, the sheath comprising a longitudinally slit tubular body (11) of resilient plastics material having inner and outer wall surfaces (11a, 11b), the longitudinal slit (25) having opposing sides, defined by edge portions (21, 22) of the body wall interconnecting the inner and outer surfaces of the wall, arranged to face each other, and **characterised by** releasable fastening means (30) having complementary parts (14, 15) each part being secured to said body wall and overlying a respective one of the edge portions facing the other edge portion and projecting towards the other complementary part, the complementary parts being responsive to forcing the edge portions towards each other to close the longitudinal slit by releasable inter-engagement with each other.

2. A protective tubular sheath as claimed in claim 1 **characterised in that** the body wall (11) is stressed to provide a bias force urging the edge portions (21, 22) towards each other and the complementary parts (14, 15) of the fastening means are arranged to interengage in absence of a separating force greater than the bias force.

3. A protective tubular sheath as claimed in claim 1 or claim 2 **characterised in that** said complementary parts of the fastening means comprise projecting hook and loop elements (16, 17) each extending from a substrate (18, 19) secured to respective one of the edge portions.

4. A protective tubular sheath as claimed in any one of claims 1 to 3 **characterised in that** the complementary parts (14, 15) of said fastening means comprise strips extending in the plane of each edge portion longitudinally along the slit for substantially the whole length of the slit.

5. A protective tubular sheath as claimed in claim 4 **characterised in that** the releasable fastening means is arranged to have the complementary parts (14, 15) separated locally by passage in a direction along the slit of an opening member extending into the sheath through the inter-engaged complementary parts of the fastening means

6. A protective tubular sheath as claimed in claim 5 when dependent upon claims 2 and 3 **characterised in that** in which the hook and loop elements are flexible and deformable uninjuriously with respect to a human finger and the bias force is arranged to be overcome, and the hook and loop elements disengaged, by an opening member comprising a said human finger.

7. A protective tubular sheath as claimed in any one of the preceding claims **characterised in that** the tubular body wall (11) is corrugated by a longitudinal succession of integrally formed peaks and valleys (12, 13), each said peak and valley extending substantially circumferentially of the body and defining by said corrugations said edge portions (21, 22) having an effective thickness greater than the thickness of the material of the body wall.

8. A protective tubular sheath (40) as claimed in claim 7 **characterised in that** at least one complementary part of the fastening means (41) corresponds in width to the thickness of the material of the body wall and follows the path of the corrugations.

9. A protective tubular sheath (10, 50, 60) as claimed in claim 7 or claim 8 **characterised in that** at least one of the complementary parts of the fastening means (14, 15, 51, 61) has a width greater than the thickness of the material of the body wall and overlies the ends of the corrugations exposed at the edge portion to which it Is secured.

10. A protective tubular sheath (60) as claimed in claim 9 **characterised in that** said at least one complementary part of the fastening means (61) has a width greater than the overall thickness of the corrugated edge portion.

## Patentansprüche

1. Schlauchförmige Schutzhülle (10; 40; 50; 60) zur Anordnung mit einem verlängerten Substrat in umgebender Beziehung, wobei die Hülle einen in Längsrichtung geschlitzten, schlauchförmigen Körper (11) aus elastischem Kunststoffmaterial mit inneren und äußeren Wandoberflächen (11a, 11b) enthält, wobei der Längsschlitz (25) zwei gegenüberliegende Seiten aufweist, die durch zwei Randabschnitte (21, 22) der Körperwand definiert sind, die die inneren und äußeren Oberflächen der Wand miteinander verbinden, die einander gegenüberliegend angeordnet sind, und durch lösbare Befestigungsmittel (30) mit komplementären Abschnitten (14, 15) gekennzeichnet sind, wobei jeder Abschnitt an der Körperwand gesichert ist und jeweils über einem der Kantenabschnitte liegt, die dem anderen Kantenabschnitt gegenüber liegen und zu dem anderen komplementären Teil vorspringen, wobei die komplementären Abschnitte reagieren, um die Randabschnitte zueinander zusammenzudrücken, um den Längsschlitz durch elastisches gegenseitiges Ineinandergreifen zu schließen.

2. Schlauchförmige Schutzhülle gemäß Anspruch 1, **dadurch gekennzeichnet, dass** die Körperwand (11) angespannt ist, um eine vorgespannte Kraft zu schaffen, die die Randabschnitte (21, 22) zueinander drängt und wobei die komplementären Abschnitte (14, 15) der Befestigungsmittel derart angeordnet sind, dass sie in Abwesenheit einer Trennkraft, die stärker als die vorgespannte Kraft ist, gegenseitig im Eingriff stehen.

3. Schlauchförmige Schutzhülle gemäß Anspruch 1 oder 2, **dadurch gekennzeichnet, dass** komplementäre Abschnitte der Befestigungsmittel vorspringende Haken- und Kupplungselemente (16, 17) enthalten, wobei jedes sich von einem Substrat (18, 19) erstreckt, das an jeweils einem der Randabschnitte gesichert ist.

4. Schlauchförmige Schutzhülle gemäß irgendeinem der Ansprüche 1 bis 3, **dadurch gekennzeichnet, dass** die komplementären Teile (14, 15) der Befestigungsmittel Streifen enthalten, die sich in der Ebene jedes Randabschnittes längs entlang des Schlitzes um im Wesentlichen die ganze Länge des Schlitzes ausdehnen.

5. Schlauchförmige Schutzhülle gemäß Anspruch 4, **dadurch gekennzeichnet, dass** die elastischen Befestigungsmittel angeordnet sind, um komplementäre Teile (14, 15) aufzuweisen, die durch Durchlassen eines Öffnungselementes in einer Richtung entlang des Schlitzes lokal getrennt sind, das sich in die Schutzhülle durch die ineinandergreifenden komplementären Teile der Befestigungsmittel erstreckt.

6. Schlauchförmige Schutzhülle gemäß Anspruch 5, im Falle der Abhängigkeit von Ansprüchen 2 und 3, **dadurch gekennzeichnet, dass** die Haken- und Kupplungselemente unverletzlich flexibel und verformbar in Bezug auf einen menschlichen Finger sind und die vorgespannte Kraft angebracht ist um überwunden zu werden und wobei die Haken- und Kupplungselemente durch ein Öffnungselement gelöst werden, das den menschlichen Finger umfasst.

7. Schlauchförmige Schutzhülle gemäß irgendeinem der vorangehenden Ansprüche, **dadurch gekennzeichnet, dass** die schlauchförmige Körperwand (11) durch eine longitudinale Aufeinanderfolge von integral gebildeten Erhebungen und Tälern (12, 13) gerillt ist, wobei jede Erhebung und jedes Tal sich im Wesentlichen im Umfang des Körpers ausdehnt und durch die Wellungen die Randabschnitte (21, 22) definiert ist, die eine effektive Dicke aufweisen, die größer ist, als die Dicke des Materials der Körperwand.

8. Schlauchförmige Schutzhülle (40) gemäß Anspruch 7, **dadurch gekennzeichnet, dass** mindestens ein komplementärer Teil der Befestigungsmittel (41) in der Breite der Dicke des Materials der Körperwand entspricht und dem Weg der Wellungen folgt.

9. Schlauchförmige Schutzhülle (10, 50, 60) gemäß Anspruch 7 oder 8, **dadurch gekennzeichnet, dass** wenigstens eines der komplementären Teile der Befestigungsmittel (14, 15, 51, 61) eine Breite aufweist, die größer ist als die Dicke des Materials der Körperwand und die Enden der Wellungen überdeckt, die bei den Randabschnitten freiliegen, zu denen es gesichert ist.

10. Schlauchförmige Schutzhülle (60) gemäß Anspruch 9, **dadurch gekennzeichnet, dass** mindestens ein komplementäres Teil der Befestigungsmittel (61) eine Breite aufweist, die größer ist als die Gesamtdicke des gewellten Randabschnittes.

## Revendications

1. Gaine tubulaire de protection (10 ; 40 ; 50 ; 60) destinée à être disposée autour d'un substrat allongé, la gaine comprenant un corps tubulaire fendu longitudinalement (11) en matière plastique élastique comportant des surfaces de parois interne et externe (11a, 11b), la fente longitudinale (25) comportant des côtés opposés, définis par des portions de bord (21, 22) de la paroi de corps reliant les surfaces interne et externe de la paroi l'une à l'autre, agencés pour se faire face, et **caractérisés par** un moyen de fixation temporaire (30) comportant des parties complémentaires (14, 15), chaque partie étant fixée à ladite paroi de corps et recouvrant une portion de bord respective donnant sur l'autre portion de bord et faisant saillie vers l'autre partie complémentaire, les parties complémentaires agissant lorsque les portions de bord sont amenées de force l'une vers l'autre pour fermer la fente longitudinale par engagement temporaire de l'une avec l'autre.

2. Gaine tubulaire de protection selon la revendication 1, **caractérisée en ce que** la paroi de corps (11) est contrainte pour produire une force de sollicitation amenant de force les portions de bord (21, 22) l'une vers l'autre et les parties complémentaires (14, 15) du moyen de fixation sont agencées pour s'engager l'une avec l'autre en l'absence d'une force de séparation supérieure à la force de sollicitation.

3. Gaine tubulaire de protection selon la revendication 1 ou la revendication 2, **caractérisée en ce que** lesdites parties complémentaires du moyen de fixation comprennent des crochets et des boucles en saillie (16, 17) s'étendant respectivement depuis un support (18, 19) fixé à l'une des portions de bord respectives.

4. Gaine tubulaire de protection selon l'une quelconque des revendications 1 à 3, **caractérisée en ce que** les parties complémentaires (14, 15) dudit moyen de fixation comprennent des bandes s'étendant dans le plan de chaque portion de bord, longitudinalement le long de la fente sur pratiquement toute la longueur de la fente.

5. Gaine tubulaire de protection selon la revendication 4, **caractérisée en ce que** le moyen de fixation temporaire est agencé de manière que les parties complémentaires (14, 15) soient séparées localement par passage dans une direction le long de la fente d'un organe d'ouverture s'étendant dans la gaine à travers les parties complémentaires mutuellement engagées du moyen de fixation.

6. Gaine tubulaire de protection selon la revendication 5 lorsque rattachée aux revendications 2 et 3, **caractérisée en ce que** les crochets et les boucles sont flexibles et déformables sans blesser les doigts de la main et la force de sollicitation est prévue pour être surmontée, et les crochets et les boucles pour être désengagés, par un organe d'ouverture consistant en un doigt de la main.

7. Gaine tubulaire de protection selon l'une quelconque des revendications précédentes, **caractérisée en ce que** la paroi de corps tubulaire (11) est ondulée par une succession longitudinale de crêtes et de creux formés d'un seul tenant (12, 13), chaque crête et creux s'étendant sensiblement sur la circonférence du corps et définissant, par lesdites ondulations, lesdites portions de bord (21, 22) ayant une épaisseur effective supérieure à l'épaisseur du matériau de la paroi de corps.

8. Gaine tubulaire de protection (40) selon la revendication 7, **caractérisée en ce qu'**au moins une partie complémentaire du moyen de fixation (41) correspond en largeur à l'épaisseur du matériau de la paroi de corps et suit la trajectoire des ondulations.

9. Gaine tubulaire de protection (10, 50, 60) selon la revendication 7 ou la revendication 8, **caractérisée en ce qu'**au moins l'une des parties complémentaires du moyen de fixation (14, 15, 51, 61) a une largeur supérieure à l'épaisseur du matériau de la paroi de corps et recouvre les extrémités des ondulations exposées à la portion de bord à laquelle elle est fixée.

10. Gaine tubulaire de protection (60) selon la revendication 9, caractérisée en ce ladite au moins une partie complémentaire du moyen de fixation (61) a une largeur supérieure à l'épaisseur totale de la portion de bord ondulée.
